# EUROPÄISCHE PATENTANMELDUNG

(11) **EP 1 195 413 A1**
(43) Veröffentlichungstag der Anmeldung: **10.04.2002**
(21) Anmeldenummer: 01122051.4
(22) Anmeldetag: 14.09.2001
(51) Int. Cl.: C09B 67/00, C09B 67/20

(54) **Verfahren zur Feinverteilung von organischen Pigmenten durch Fällung**

(30) Priorität: 05.10.2000 DE 10049201
(71) Anmelder: Clariant GmbH, 65929 Frankfurt am Main (DE)
(72) Erfinder: Dietz, Erwin, Dr., 61462 Königstein (DE); Weber, Joachim, Dr., 65929 Frankfurt am Main (DE); Schnaitmann, Dieter, Dr., 65817 Eppstein (DE); Wille, Christian, Dr., 69469 Weinheim (DE); Unverdorben, Leonhard, Dr., 61130 Nidderau (DE); Brychcy, Klaus, Dr., 60488 Frankfurt am Main (DE)
(74) Vertreter: Hütter, Klaus, Dr.

(57) **Zusammenfassung**

Gegenstand der Erfindung ist ein Verfahren zur Feinverteilung von Pigmenten, dadurch gekennzeichnet, dass man in grobkristallinem Zustand vorliegende Rohpigmente in einem Lösemittel löst und mit einem flüssigen Fällmedium fällt, indem man die Pigmentlösung und das Fällmedium in einem Mikrojetreaktor durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum eingeleitet wird und die entstehende Pigmentsuspension und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

## Beschreibung

Organische Pigmente sind seit langem bekannt und haben zum Pigmentieren von hochmolekularen organischen Materialien wie Lacken, Kunststoffen oder Druckfarben große industrielle Bedeutung erlangt. Bei der Synthese fallen die Pigmente oft als grobkristalline Rohpigmente an, die den technischen Anforderungen noch nicht entsprechen. Sie müssen erst einer Feinverteilung unterworfen werden, die eine Korngrößenverkleinerung bewirkt. Anschließend erfolgt meist noch eine thermische Behandlung, um den technischen Anforderungen entsprechende Pigmente zu erhalten, oder es kommt zum Einsatz von Pigmentdispergatoren oder anderer Zusatzstoffe, um spezielle Effekte zu erzielen, wie beispielsweise in der EP-A-0 807 668 beschrieben.

Zur Überführung eines Rohpigments in Pigment- oder Präpigmentform sind verschiedene Feinverteilungsverfahren bekannt, beispielsweise Acidpasting- (Umfällen aus Lösemitteln, besonders aus Säuren), Trockenmahl- und Nassmahlverfahren. Bei den Trockenmahl- und Nassmahlverfahren kommt es durch Einsatz von Mahlkörpern zu Abrieb und damit zu Eintrag von Fremdstoffen ins Produkt.
Die US-PS 3 607 336 beschreibt ein Acidpasting-Verfahren. Das Pigment wird in Schwefelsäure gelöst und in turbulenter Strömung gefällt. Es wird offenbart, dass durch die Fällung in turbulenter Strömung ein feineres Korn erzielt werde als bislang mit den herkömmlichen Fällungsvarianten möglich gewesen sei.
Die EP-A-0 075 182 beschreibt ein Acidpasting-Verfahren, bei dem Polyphosphorsäure als-Lösemittel eingesetzt wird.
Die EP-A-0 737 723 beschreibt ein Verfahren zum Fällen von Pigmenten aus Lösungen in polaren Lösemitteln und Lauge.

Der vorliegenden Erfindung lag die Aufgabe zugrunde, ein universell einsetzbares und technisch zuverlässiges Verfahren zur Feinverteilung von organischen Pigmenten durch Fällung zu entwickeln, bei dem keine Kontamination durch Fremdstoffe stattfinden kann und bei dem besonders feine Teilchen und eine besonders enge Korngrößenverteilung entstehen.

Es wurde gefunden, dass die erfindungsgemäße Aufgabe überraschenderweise durch Einsatz eines Mikrojetreaktors gelöst werden kann.

Gegenstand der vorliegenden Erfindung ist ein Verfahren zur Feinverteilung von Pigmenten, dadurch gekennzeichnet, dass man ein oder mehrere in grobkristallinem Zustand vorliegende Rohpigmente in einem Lösemittel löst und mit einem flüssigen Fällmedium fällt, indem man die Pigmentlösung und das Fällmedium in einem Mikrojetreaktor zweckmäßigerweise über eine oder mehrere Pumpen, vorzugsweise Hochdruckpumpen, durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum, insbesondere im Kollisionspunkt der Strahlen, gegebenenfalls auch zur Kühlung, eingeleitet wird und die entstehende Pigmentsuspension und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

Für die erfindungsgemäße Feinverteilung der Rohpigmente ist eine intensive, schnelle, gleichmäßige und reproduzierbare Durchmischung des Fällmediums mit der Pigmentlösung erforderlich. Dies wird dadurch erreicht, dass die eingesetzte Lösung des Pigments und das Fällmedium unter einem Druck von mindestens 10 bar, bevorzugt mindestens 50 bar, insbesondere von 50 bis 5000 bar, in den Reaktorraum gespritzt werden.

Um Materialverschleiß an den inneren Oberflächen des Gehäuses zu vermeiden, wird der Kollisionspunkt in den materialfernen Gasraum verlegt. Unter "materialfern" wird dabei verstanden, dass in der Umgebung des Kollisionspunkts der Strahlen durch das eingeleitete Gas oder verdampfende Flüssigkeit eine Gasatmosphäre aufrechterhalten wird. Dies bedeutet, dass der Kollisionspunkt, in dem die Strahlen aufeinandertreffen, nicht an einer Gefäßwand oder einer Rohrwand anliegt. Dadurch wird Materialverschleiß verhindert, der dort auftreten würde, wo Kavitation an Materialwänden stattfindet. Zu Kavitation kommt es besonders bei Einsatz von hohen Drücken, insbesondere bei Drücken über 3000 bar. Des weiteren werden die kollidierenden Strahlen durch die Gasatmosphäre vor ihrem Zusammenprall nicht abgebremst, wie es beispielsweise der Fall wäre, wenn sie durch eine Flüssigkeit passieren müssten.

Das Material der Düsen soll möglichst hart und dadurch verschleißarm sein, es kommen beispielsweise Keramiken, wie Oxide, Carbide, Nitride oder Mischverbindungen daraus in Betracht, wobei vorzugsweise Aluminiumoxid, insbesondere als Saphir oder Rubin, eingesetzt wird, aber auch Diamant besonders geeignet ist. Es kommen als Hartstoffe auch Metalle, insbesondere gehärtete Metalle, in Betracht. Die Bohrungen der Düsen haben Durchmesser von kleiner als 2 mm, vorzugsweise kleiner 0,5 mm und insbesondere kleiner als 0,4 mm.

Der Mikrojetreaktor kann prinzipiell als Zwei-, Drei- oder Mehrstrahlreaktor ausgeführt sein, bevorzugt ist eine Zweistrahl-Ausführung. Bei einer Anordnung mit zwei Strahlen treffen die Strahlen bevorzugt frontal (Winkel zwischen den Strahlen 180°) aufeinander, bei einer Dreistrahl-Anordnung ist ein Winkel von 120° zwischen den Strahlen zweckmäßig. Günstigerweise können die Düsen in einer auf den gemeinsamen Kollisionspunkt justierbaren Vorrichtung gelagert sein. Durch diese unterschiedlichen Ausführungsformen können beispielsweise für die Fällung erforderliche, unterschiedliche Volumenverhältnisse der Pigmentlösung zum Fällmedium realisiert werden. Beispielsweise kann die Pigmentlösung durch 1, 2 oder-mehrere Düsen, bevorzugt durch eine Düse, und unabhängig davon das Fällmedium durch 1, 2 oder mehrere Düsen, bevorzugt durch 1, 2 oder 3 Düsen, auf einen gemeinsamen Kollisionspunkt gespritzt werden.

In einer besonders bevorzugten Ausführungsform des erfindungsgemäßen Verfahrens werden die Pigmentlösung und das Fällmedium mittels zweier Hochdruckpumpen durch zwei sich gegenüberstehende Düsen frontal aufeinander gespritzt. Eine weitere besonders bevorzugte Ausführungsform des erfindungsgemäßen Verfahrens ist ein Dreistrahlreaktor, bei dem beispielsweise mittels einer Hochdruckpumpe die Pigmentlösung durch eine Düse und mittels einer zweiten Hochdruckpumpe das Fällmedium durch zwei Düsen auf den gemeinsamen Kollisionspunkt gespritzt werden.

Die Düse der Pigmentlösung und die des Fällmediums können unterschiedliche Durchmesser haben. Zweckmäßigerweise hat die Düse, durch die das Fällmedium gespritzt wird, den 0,2-fachen bis 5-fachen, bevorzugt den 0,3-fachen bis 3-fachen, Durchmesser im Vergleich zu der Düse, durch die die Pigmentlösung gespritzt wird.

Die Temperaturen der zugeführten Pigmentlösung und des Fällmediums liegen zweckmäßigerweise im Bereich von -50 bis 250°C, vorzugsweise zwischen 0 und 190°C, besonders zwischen 0 bis 170°C. Es kann auch über dem Siedepunkt der Pigmentlösung oder des Fällmediums unter Druck gearbeitet werden.

Falls erforderlich, kann mit dem eingeleiteten Gas oder der verdampfenden Flüssigkeit, die für die Aufrechterhaltung der Gasatmosphäre im Gehäuseinneren verwendet wird, gekühlt werden. Es kann auch über eine zusätzliche Bohrung im Gehäuse eine verdampfende Kühlflüssigkeit oder ein Kühlgas in den Reaktorraum eingeleitet werden. Dabei kann der Aggregatzustand des Kühlmediums temperatur- und/oder druckbedingt sein. Es kann sich beispielsweise um Luft, Stickstoff, Kohlendioxid oder andere, inerte Gase oder Flüssigkeiten mit geeignetem Siedepunkt unter erhöhtem Druck handeln. Dabei ist es möglich, dass der Übergang des Kühlmediums vom flüssigen in den gasförmigen Zustand im Reaktor selbst dadurch stattfindet, dass bei der Fällung freiwerdende Wärme den Wechsel des Aggregatzustandes bewirkt. Es ist auch möglich, dass die Verdunstungskälte eines sich entspannenden Gases zur Kühlung genutzt wird. Das den Reaktorraum umschließende Gehäuse kann auch thermostatierbar ausgelegt werden und zur Kühlung verwendet werden; oder das Produkt kann nach Austritt aus dem Gehäuse gekühlt werden. Es kann beispielsweise der Druck im Reaktorraum mittels eines Druckhalteventils eingestellt und gehalten werden, so dass das verwendete Gas in flüssigem oder über- oder unterkritischem Zustand vorliegt. So kann beispielsweise die Verdunstungskälte eines Gases genutzt werden.
Wenn bei erhöhter Temperatur gearbeitet werden soll, kann die für die Erwärmung erforderliche Energie vor dem Austritt aus den Düsen der Pigmentlösung und/oder dem Fällmedium, beispielsweise in den zuführenden Leitungen, oder über das thermostatierbare Gehäuse oder über das eingeleitete Gas zugeführt werden. Die gewählte Temperatur kann grundsätzlich wegen der hohen Drücke in den Hochdrucklanzen auch erheblich über dem Siedepunkt des Lösemittels oder Fällmediums liegen. Als Lösemittel und Fällmittel kommen daher auch solche in Frage, die bei der Temperatur der Fällung im Gehäuseinneren unter Normaldruck als Gase vorliegen. Die Pigmentlösung und das Fällmittel können auch unterschiedliche Temperatur haben.

Für die Feinverteilung nach dem erfindungsgemäßen Verfahren werden zweckmäßigerweise die bei ihrer Synthese oder bei ihrer Reinigung grobkristallin anfallenden Rohpigmente, Mischungen dieser Rohpigmente, Pigmentzubereitungen dieser Rohpigmente, oberflächenbehandelte Rohpigmente oder grobkristalline Mischkristallrohpigmente eingesetzt.
Als grobkristalline Rohpigmente kommen beispielsweise solche aus der Gruppe der Perylene, Perinone, Chinacridone, beispielsweise unsubstituiertes Chinacridon der beta- oder der gamma-Phase oder auch Chinacridonmischkristallrohpigmente, Chinacridonchinone, Anthrachinone, Anthanthrone, Benzimidazolone, Disazokondensationspigmente, Azopigmente, Indanthrone, Phthalocyanine, wie beispielsweise chlorierte CuPc, unchlorierte CuPc der alpha- oder beta-Phase, metallfreie Phthalocyanine oder Phthalocyanine mit anderen Metallatomen wie beispielsweise Aluminium oder Cobalt, Dioxazine, beispielsweise Triphendioxazine, Aminoanthrachinone,-Diketopyrrolopyrrole, Indigopigmente, Thioindigopigmente, Thiazinindigopigmente, Isoindoline, Isoindolinone, Pyranthrone, Isoviolanthrone, Flavanthrone und Anthrapyrimidine, einzeln, in Mischungen oder als Mischkristalle, z.B. aus zwei oder drei solcher Pigmente, in Betracht.

Unter grobkristallinen Rohpigmenten werden solche Rohpigmente verstanden, die erst nach einer Zerkleinerung der Teilchen zum Pigmentieren von organischen Materialien geeignet sind. In den meisten Fällen sind dies solche mit einer mittleren Teilchengröße D₅₀ von mehr als 1 µm.

Als Lösemittel kommen alle Flüssigkeiten wie organische Lösemittel, Säuren und Laugen, und Mischungen daraus, gegebenenfalls auch unter Zusatz von Wasser, in Betracht, von denen höchstens die 40-fache Gewichtsmenge, bevorzugt höchstens die 25-fache Gewichtsmenge, insbesondere höchstens die 15-fache Gewichtsmenge, bezogen auf das Gewicht des zu lösenden Rohpigments, eingesetzt werden muss, um eine vollständige Lösung des Rohpigments zu erreichen. Ökonomisch zweckmäßig sind daher Lösungen, deren gelöster Pigmentanteil 2,5 bis 40 Gew.-%, vorzugsweise 5 bis 20 Gew.-%, bezogen auf das Gesamtgewicht der Lösung, beträgt.

Als Lösemittel werden bevorzugt Säuren wie Schwefelsäure, beispielsweise als 96 gew.-%ige Schwefelsäure, als Monohydrat oder als Oleum; Chlorsulfonsäure und Polyphosphorsäure, einzeln oder in Mischung, eingesetzt. Diese Säuren können auch als Mischungen mit einem oder mehreren organischen Lösemitteln eingesetzt werden, wie Alkohole mit 1 bis 10 C-Atomen, wie beispielsweise Methanol, Ethanol, n-Propanol, Isopropanol, Butanole, wie n-Butanol, sek.-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylenglykole oder Polypropylenglykole; Ether, wie Methylisobutylether, Tetrahydrofuran oder Dimethoxyethan; Glykolether, wie Monomethyl- oder Monoethylether des Ethylen- oder Propylenglykols, Diethylenglykolmonomethylether, Diethylenglykol-monoethylether, Butylglykole oder Methoxybutanol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäure- oder Benzoesäure-C₁-C₆-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Pyridin, Morpholin, Picolin oder Chinolin; sowie Hexamethylphosphorsäuretriamid, 1,3-Dimethl-2-imidazolidinon, Dimethylsulfoxid und Sulfolan.

Weiterhin als Lösemittel bevorzugt werden Mischungen aus organischen, polaren Lösemitteln, beispielsweise aliphatische Säureamide, wie Formamid, Dimethylformamid oder N,N-Dimethylacetamid; Harnstoffderivate, wie Tetramethylharnstoff; cyclische Carbonsäureamide, wie N-Methylpyrrolidon, Valero- oder Caprolactam; Nitrile, wie Acetonitril; aromatische Lösemittel, wie Nitrobenzol, o-Dichlorbenzol, Benzoesäure oder Phenol; aromatische Heterocyclen, wie Pyridin, oder Chinolin; Hexamethylphosphorsäuretriamid, 1,3-Dimetyl-2-imidazolidinon, Dimethylsulfoxid oder Sulfolan; oder gegebenenfalls Mischungen dieser Lösemittel mit Laugen, wie Oxiden oder Hydroxiden der Alkali- oder Erdalkalimetalle, wie beispielsweise Kalilauge oder Natronlauge.

Besonders bevorzugte polare, organische Lösemittel sind Dimethylformamid, N,N-Dimethylacetamid, N-Methylpyrrolidon, Dimethylsulfoxid und Sulfolan als Mischung mit Kalilauge oder Natronlauge.

Als Fällmedium können prinzipiell alle Flüssigkeiten eingesetzt werden, die bei der Mischung mit der Pigmentlösung die Löslichkeit des Pigments soweit herabsetzen, dass eine möglichst quantitative Fällung stattfindet. Es kommen daher Wasser, eine wässrig-organische Flüssigkeit oder eine organische Flüssigkeit, mit oder ohne Zusatz von Säuren oder Laugen, in Betracht.
Im Falle der Pigmentlösungen in Säure wird bevorzugt Wasser als Fällmedium verwendet, das Wasser kann aber auch in Mischung mit einer bevorzugt mit Wasser mischbaren, organischen Flüssigkeit eingesetzt werden. Es ist auch möglich, die Säure während der Fällung teilweise oder ganz zu neutralisieren.
Im Falle der alkalischen Pigmentlösungen in einem polaren Lösemittel ist das Fällmedium bevorzugt Wasser oder eine wässrig-organische Flüssigkeit, gegebenenfalls mit Säurezusatz, oder eine Mischung aus einer organischen Flüssigkeit mit einer Säure.

Als organische Flüssigkeiten für das Fällmedium können beispielsweise Alkohole mit 1 bis 10 C-Atomen, wie beispielsweise Methanol, Ethanol, n-Propanol, Isopropanol, Butanole, wie n-Butanol, sek.-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylenglykole oder Polypropylenglykole; Ether, wie Methylisobutylether, Tetrahydrofuran oder Dimethoxyethan; Glykolether, wie Monomethyl- oder Monoethylether des Ethylen- oder Propylenglykols, Diethylenglykol-monomethylether, Diethylenglykolmonoethylether, Butylglykole oder Methoxybutanol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate,-wie 1-Methoxy-2-propylacetat; oder Phthalsäure- oder Benzosäure-C₁-C₆-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Pyridin, Morpholin, Picolin oder Chinolin; sowie Hexamethylphosphorsäuretriamid, 1,3-Dimetyl-2-imidazolidinon, Dimethylsulfoxid und Sulfolan; oder Mischungen dieser Flüssigkeiten eingesetzt werden.

Im erfindungsgemäßen Verfahren können auch übliche Hilfsmittel wie beispielsweise Tenside, nichtpigmentäre und pigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon eingesetzt werden.
Die Zugabe der Hilfsmittel kann zu einem beliebigen Zeitpunkt vor, während oder nach der Fällung im Mikrojetreaktor erfolgen, auf einmal oder in mehreren Portionen. Dabei können die Hilfsmittel beispielsweise vor dem Einspritzen zu der Pigmentlösung oder zu dem Fällmedium, aber auch während der Fällung in flüssiger, gelöster oder suspendierter Form mittels eines separaten Strahls durch Einspritzen in den Kollisionspunkt zugegeben werden.
Die Gesamtmenge der zugegebenen Hilfsmittel kann 0 bis 40 Gew.-%, bevorzugt 1 bis 30 Gew.-%, insbesondere 2,5 bis 25 Gew.-%, bezogen auf das Rohpigment, betragen.

Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Fällung nicht schäumen. Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.
Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht.
Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht durch chemische Modifikation von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen, beispielsweise Polyolefine, Polyester, Polyether, Polyamide, Polyimine, Polyacrylate, Polyisocyanate, Block-Copolymere daraus, Copolymere aus den entsprechenden Monomeren; oder Polymere einer Klasse, die mit wenigen Monomeren einer anderen Klasse modifiziert sind, sein. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch-mit-aromatischen, nicht pigmentären Substanzen modifiziert sein. Nichtpigmentäre Dispergiermittel können desweiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum zum Teil im Handel erhältlich (z.B. Solsperse® , Avecia; Disperbyk® , Byk, Efka® , Efka). Es sollen im Folgenden stellvertretend eineige Typen genannt werden, zum Einsatz können jedoch prinzipiell beliebige andere, beschriebene Substanzen kommen, beispielsweise Kondensationprodukte aus Isocyanaten und Alkoholen, Di- oder Polyolen, Aminoalkoholen oder Di-oder Polyaminen, Polymere aus Hydroxycarbonsäuren, Copolymere aus Olefinenmonomeren oder Vinylmonomeren und ethylenisch ungesättigten Carbonsäureestern, Urethan-haltige Polymere von ethylenisch ungesättigten Monomeren, Urethan-modifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Kammdispergiermittel aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermittel sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalen oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäuregruppen haltige Pigmentdispergatoren, Sulfonamidgruppen haltige Pigmentdispergatoren, Ethergruppen haltige Pigmentdispergatoren, oder Carbonsäure-, Carbonsäureester- oder Carbonamidgruppen haltige Pigmentdispergatoren.

Es können für die Pigmentlösung, das Fällmedium und gegebenenfalls für Hilfsmittel auch unterschiedliche Strahlweiten oder eine unterschiedliche Anzahl von Strahlen verwendet werden und damit beispielsweise erforderliche, unterschiedliche Volumenverhältnisse realisiert werden. Es ist mit dem erfindungsgemäßen Verfahren auch möglich, durch den Einsatz mehr als eines Rohpigments Mischungen oder gegebenenfalls auch Mischkristalle von Pigmenten herzustellen. Bevorzugt werden dabei die Rohpigmente zusammen gelöst und eingespritzt, sie können aber auch als getrennte Lösungen eingespritzt werden.

Das Pigment kann direkt nach der Fällung isoliert werden, gegebenenfalls ist es aber auch möglich, mit oder ohne Zwischenisolierung eine Nachbehandlung (Finish) mit Wasser und/oder einem organischen Lösemittel durchzuführen, beispielsweise bei Temperaturen von 20 bis 250°C, gegebenenfalls unter Zusatz von Hilfsmitteln.

Es war überraschend und nicht vorhersehbar, daß die Feinverteilung durch Fällung von Pigmentlösungen durch den Zusammenprall von Strahlen in einem Mikrojetreaktor in dieser einfachen und technisch unkomplizierten Weise möglich ist und zu feinen Teilchen und enger Korngrößenverteilung führt.

Die nach der vorliegenden Erfindung erhältlichen Pigmente zeichnen sich durch hervorragende coloristische Eigenschaften, insbesondere durch hohe Flockungsstabilität, leichte Dispergierbarkeit, gutes Glanzverhalten und hohe Farbstärke aus.

Erfindungsgemäß hergestellte Pigmente eignen sich zum Pigmentieren von natürlichen oder synthetischen hochmolekularen organischen Materialien, wie beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Latices, Casein, Silikone und Silikonharze, einzeln oder in Mischungen.
Dabei spielt es keine Rolle, ob die erwähnten hochmolekularen organischen Verbindungen als plastische Massen, Gießharze, Pasten, Schmelzen oder in Form von Spinnlösungen, Lacken, Lasuren, Schäumen, Tuschen, Tinten, Beizen, Anstrichstoffen, Dispersionsfarben oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäß hergestellten Pigmente in einer Menge von vorzugsweise 0,05 bis 30 Gew.-%, vorzugsweise 0,1 bis 15 Gew.-% ein.
Mit den nach dem erfindungsgemäßen Verfahren hergestellten Pigmente können die technisch gängigen Einbrennlacke aus der Klasse der Alkyd-Melamin-Harzlacke, Acryl-Melamin-Harzlacke, Polyesterlacke, Highsolidacrylharzlacke, wäßrige Lacke auf Polyurethanbasis sowie Zweikomponentenlacke auf Basis polyisocyanatvernetzbarer Acrylharze und insbesondere Automobil-Metallic-Lacke pigmentiert werden.
Die erfindungsgemäß hergestellten Pigmente sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmente als Farbmittel in Ink-Jet Tinten auf wäßriger und nichtwäßriger Basis sowie in solchen Tinten, die nach dem hot-melt-Verfahren arbeiten, geeignet.

Darüber hinaus sind die erfindungsgemäß hergestellten Pigmente auch als Farbmittel für Farbfilter, sowohl für die subtraktive als auch für die additive Farberzeugung, geeignet.
Zur Beurteilung der Eigenschaften der nach der vorliegenden Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat, ein High-Solid-Acrylharzeinbrennlack auf Basis einer nichtwäßrigen Dispersion (HS) sowie ein wäßriger Lack auf Polyurethanbasis (PUR) ausgewählt.
Die Bestimmung der Farbstärke und des Farbtons erfolgte nach DIN 55986.
Die Rheologie des Mahlguts nach der Dispergierung (mill base-Rheologie) wurde anhand der folgenden fünfstufigen Skala bewertet:
5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20 ° nach DIN 67530 (ASTMD 523) mit dem "multigloss"-Glanzmeßgerät der Firma Byk-Mallinckrodt.
Die Bestimmung der Lösemittelechtheit erfolgte nach DIN 55976.
Die Bestimmung der Überlackierechtheit erfolgte nach DIN 53221.
Die Bestimmung der mittleren Teilchendurchmesser D₅₀ der grobkristallinen Rohpigmente erfolgte durch Laserlichtbeugung.
Die Bestimmung der mittleren Teilchendurchmesser D₅₀ der Pigmente in den Pigmentpräparationen erfolgte durch graphische Auswertung von elektronenmikroskopischen Aufnahmen.
Die Bestimmung der Kristallphase erfolgte durch Röntgenspektroskopie. Die Aufnahme der Röntgenspektren erfolgte mit CuKα-Strahlung.

Im vorangegangenen Text und in den nachstehenden Beispielen beziehen sich Teile jeweils auf Gewichtsteile und Prozent jeweils auf Gewichtsprozent der so beschriebenen Substanzen.

### Beispiel 1a (Feinverteilung mit Mikrojetreaktor):

1636 Teile Tetrachlor-Kupferphthalocyanin-Rohpigment werden in 16364 Teilen 96 %iger Schwefelsäure bei Raumtemperatur gelöst. Diese Pigmentlösung wird mit einem Druck von 50 bar durch eine Düse mit einem Durchmesser von 300 µm eines Zweistrahl-Mikrojetreaktors gepumpt, gleichzeitig wird durch die zweite Düse, die ebenfalls einen Durchmesser von 300 µm hat, mit einem Druck von 50 bar Wasser gepumpt. Die beiden Düsen stehen sich frontal gegenüber, die beiden Strahlen prallen frontal in einer Gasatmosphäre aufeinander. Die entstehende Pigmentsuspension wird durch einen Druckluftstrom von ca. 0,5 m³/h ausgetragen, gleichzeitig dient der Druckluftstrom zur Aufrechterhaltung der Gasatmosphäre am Kollisionspunkt der Strahlen. Der Druckluftstrom tritt senkrecht zu den beiden Strahlen durch eine Öffnung-im-Reaktorgehäuse-ein. Die Austrittsöffnung für die Druckluft und die Pigmentsuspension liegt auf der gegenüberliegenden Seite zur Eintrittsöffnung des Druckluftstroms. Die Pigmentsuspension wird abgesaugt und mit Wasser neutral gewaschen. Eine Probe des Presskuchens wird bei 80°C getrocknet. Der wässrig-feuchte Presskuchen wird mit Wasser zu einer 5 %igen Suspension angerührt, die Suspension wird auf 130°C erhitzt. Nach dem Abkühlen wird filtriert, mit Wasser gewaschen und das Tetrachlor-Kupferphthalocyanin-Pigment bei 80°C getrocknet. Die spezifische Oberfläche, bestimmt gemäß DIN 66132, beträgt 29,2 m²/g. Die mit Elektronenmikroskopie bestimmte mittlere Teilchengröße D₅₀ beträgt 26 nm, die Standardabweichung 11 nm.

### Beispiel 1b (Vergleichsbeispiel: konventionelle Feinverteilung gemäß US 3,607,336):

38 Teile Tetrachlor-Kupferphthalocyanin-Rohpigment werden in 370 Teilen 96%iger Schwefelsäure bei Raumtemperatur gelöst. Diese Pigmentlösung wird mit einer Wasserstrahlpumpe angesaugt und das Pigment in der Wasserstrahlpumpe gefällt. Die entstandene Pigmentsuspension wird filtriert, der Presskuchen wird mit Wasser salzfrei gewaschen. Mit dem Presskuchen wird eine Wärmebehandlung wie in Beispiel 1a durchgeführt. Man erhält 43 Teile Tetrachlor-Kupferphthalocyanin-Pigment. Die spezifische Oberfläche, bestimmt gemäß DIN 66132, beträgt 12,6 m²/g. Die mit Elektronenmikroskopie bestimmte mittlere Teilchengröße D₅₀ beträgt 34 nm, die Standardabweichung 20 nm.

Die spezifischen Oberflächen und die mittlere Teilchengrößen zeigen, dass das gemäß Beispiel 1a mit dem Mikrojetreaktor hergestellte Pigment des feinteiligere ist. Außerdem zeigt es eine deutlich engere Korngrößenverteilung. In einem HS-Lacksystem werden mit den Pigmenten, hergestellt gemäß Beispiel 1a und 1b, Lackierungen angefertigt. Die Rheologie des Mahlguts ist ein beiden Fällen gleich und wird mit 3 bis 4 bewertet. Das gemäß Beispiel 1a hergestellte Pigment liefert transparente und glänzende Lackierungen, die im Vergleich zu den Lackierungen aus dem gemäß Beispiel 1b hergestellten Pigment deutlich farbstärker sind. So zeigt auch die Farbstärke, dass das Pigment hergestellt gemäß Beispiel 1a das feinteiligere ist, was aber vorteilhafterweise hier nicht zu einer Verschlechterung der Rheologie des Mahlguts führt, wie sie normalerweise bei einer Verschiebung der mittleren Teilchengröße zu niedrigeren Werten beobachtet wird.

## Patentansprüche

1. Verfahren zur Feinverteilung von Pigmenten, **dadurch gekennzeichnet, dass** man in-grobkristallinem Zustand vorliegende Rohpigmente in einem Lösemittel löst und mit einem flüssigen Fällmedium fällt, indem man die Pigmentlösung und das Fällmedium in einem Mikrojetreaktor durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum eingeleitet wird und die entstehende Pigmentsuspension und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

2. Verfahren nach Anspruch 1, **dadurch gekennzeichnet, dass** die Pigmentlösung sowie das Fällmedium mit einem Druck von mindestens 10 bar, bevorzugt von 50 bis 5000 bar, in den Reaktorraum gespritzt werden.

3. Verfahren nach Anspruch 1 oder 2, **dadurch gekennzeichnet, dass** die Temperatur der zugeführten Pigmentlösung und des Fällmediums -50 bis 250°C, vorzugsweise 0 bis 190°C, insbesondere 0 bis 170°C, beträgt.

4. Verfahren nach mindestens einem der Ansprüche 1 bis 3, **dadurch gekennzeichnet, dass** das Rohpigment aus der Gruppe der Perylene, Perinone, Chinacridone, Chinacridonchinone, Anthrachinone, Anthanthrone, Benzimidazolone, Disazokondensationspigmente, Azopigmente, Indanthrone, Phthalocyanine, Dioxazine, Aminoanthrachinone, Diketopyrrolopyrrole, Indigopigmente, Thioindigopigmente, Thiazinindigopigmente, Isoindoline, Isoindolinone, Pyranthrone, Isoviolanthrone, Flavanthrone, Anthrapyrimidine, oder der Mischkristalle aus zwei oder drei solcher Pigmente, ausgewählt ist.

5. Verfahren nach mindestens einem der Ansprüche 1 bis 4, **dadurch gekennzeichnet, dass** das Lösemittel der Pigmentlösung eine Säure mit oder ohne organischem Lösemittel ist.

6. Verfahren nach Anspruch 5, **dadurch gekennzeichnet, dass** die Säure Schwefelsäure, Schwefelsäure-Monohydrat, Oleum, Chlorsulfonsäure, Polyphosphorsäure oder eine Mischung daraus ist.

7. Verfahren nach Anspruch 5 **dadurch gekennzeichnet, dass** das organische Lösemittel ein Alkohol; Glykol; Polyglykol; Ether; Glykolether; Keton; aliphatisches Säureamid; Harnstoffderivat; Ester; Nitril; aliphatischer oder aromatischer Kohlenwasserstoff; aromatischer Heterocyclus; Hexamethylphosphorsäuretriamid, 1,3-Dimetyl-2-imidazolidinon, Dimethylsulfoxid; Sulfolan; oder eine Mischung daraus ist.

8. Verfahren nach einem oder mehreren der Ansprüche 1 bis 4, **dadurch gekennzeichnet, dass** das Lösemittel der Pigmentlösung ein organisches, polares Lösemittel in Mischung mit einer Lauge, vorzugsweise Natronlauge und/oder Kalilauge, ist.

9. Verfahren nach Anspruch 8, **dadurch gekennzeichnet, dass** das organische, polare Lösemittel ein Carbonsäureamid, ein Harnstoffderivat, ein Nitril, ein aromatisches Lösemittel, ein aromatischer Heterocyclus, Hexamethylphosphorsäuretriamid, 1,3-Dimetyl-2-imidazolidinon, Dimethylsulfoxid oder Sulfolan, einzeln oder in Mischung ist.

10. Verfahren nach Anspruch 8 oder 9, **dadurch gekennzeichnet, dass** das organische, polare Lösemittel Formamid, Dimethylformamid, N,N-Dimethylacetamid, Tetramethylharnstoff, N-Methylpyrrolidon, Valerolactam, Caprolactam, Acetonitril, Nitrobenzol, o-Dichlorbenzol, Benzoesäure, Phenol, Pyridin oder Chinolin ist.

11. Verfahren nach mindestens einem der Ansprüche 1 bis 10, **dadurch gekennzeichnet, dass** das Fällmedium Wasser oder eine wässrig-organische oder eine organische Flüssigkeit, mit oder ohne Zusatz von Säure oder Lauge, ist.

12. Verfahren nach mindestens einem der Ansprüche 1 bis 11, **dadurch gekennzeichnet, dass** die Feinverteilung in Gegenwart von 0 bis 40 Gew.-%, vorzugsweise 1 bis 30 Gew.-%, bezogen auf das Gesamtgewicht des Rohpigments, ein oder mehrere Hilfsmittel aus der Gruppe der Tenside, nichtpigmentären und pigmentären Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber und Lichtstabilisatoren durchgeführt wird.

13. Verfahren nach mindestens einem der Ansprüche 1 bis 12, **dadurch gekennzeichnet, dass** das Gas Luft, Stickstoff oder Kohlendioxid ist.

14. Verfahren nach mindestens einem der Ansprüche 1 bis 13, **dadurch gekennzeichnet, dass** der Kollisionspunkt der Strahlen in einem materialfernen Bereich des Reaktorraums liegt.

15. Verfahren nach mindestens einem der Ansprüche 1 bis 14, **dadurch gekennzeichnet, dass** die Pigmentlösung durch 1, 2 oder mehrere Düsen, bevorzugt durch eine Düse, und unabhängig davon das Fällmedium durch 1, 2 oder mehrere Düsen, bevorzugt durch 1, 2 oder 3 Düsen, auf einen gemeinsamen Kollisionspunkt gespritzt werden.

16. Verfahren nach mindestens einem der Ansprüche 1 bis 15, **dadurch gekennzeichnet, dass** der Düsendurchmesser der Düse, durch die das Fällmedium gespritzt wird, das 0,2-fache bis 5-fache, bevorzugt -das-0,3-fache-bis 3-fache, des Durchmessers der Düse beträgt, durch die die Pigmentlösung gespritzt wird.
